# EUROPÄISCHE PATENTANMELDUNG

(11) **EP 3 254 752 A1**
(43) Veröffentlichungstag der Anmeldung: **13.12.2017**
(21) Anmeldenummer: 16173501.4
(22) Anmeldetag: 08.06.2016
(51) Int. Cl.: B01J 19/30

(54) **FÜLLKÖRPER**

(71) Anmelder: Vereinigte Füllkörper-Fabriken GmbH & Co. KG, 56235 Ransbach-Baumbach (DE)
(72) Erfinder: Schwämmlein, Kurt, 55545 Bad Kreuznach (DE)
(74) Vertreter: Quermann, Helmut

(57) **Zusammenfassung**

Die Erfindung betrifft einen Füllkörper (1), insbesondere für Stoff- und/oder Wärmeaustauschkolonnen, die von einer Gas- und/oder Flüssigkeitsströmung durchsetzt werden, aufweisend eine Außenstruktur (2), wobei durch die Außenstruktur (2) zwei einander abgewandte Hauptausdehnungsflächen (3, 4) des Füllkörpers (1) gebildet sind, und aufweisend eine zwischen den beiden Hauptausdehnungsflächen (3, 4) ausgebildete Innenstruktur (15). Dabei weist die Innenstruktur (15) zumindest ein inneres Leitprofil (5) auf, wobei das innere Leitprofil (5) geneigt zu den Hauptausdehnungsflächen (3, 4) ausgebildet ist.

## Beschreibung

Die Erfindung betrifft einen Füllkörper, insbesondere für Stoff- und/oder Wärmeaustauschkolonnen, die von einer Gas- und/oder Flüssigkeitsströmung durchsetzt werden, aufweisend eine Außenstruktur, wobei durch die Außenstruktur zwei einander abgewandte Hauptausdehnungsflächen des Füllkörpers gebildet sind, und aufweisend eine zwischen den beiden Hauptausdehnungsflächen ausgebildete Innenstruktur.

Es ist bekannt, Füllkörper verschiedener Ausführungsformen angeordnet in einem sog. Füllkörperbett - meist als regellose Schüttungen - in Kolonnen, Reaktoren und ähnlichen Apparaten einzusetzen. Technische Anwendungen sind beispielsweise gegeben bei thermischen, chemischen oder physikalischen Verfahren wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen und/oder sich bildenden Rinnsalen.

Ferner dienen Füllkörper bzw. Füllkörperschüttungen der Abscheidung kleiner und kleinster Flüssigkeitströpfchen bis hin zur Abscheidung von sogenannten Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Ein Füllkörper, der die Merkmale des Oberbegriffs des Patentanspruchs 1 aufweist, ist aus der Druckschrift EP 1 586 375 A1 bekannt. Dieser Füllkörper weist zwei einander abgewandte Hauptausdehnungsflächen, eine Außenstruktur sowie eine Innenstruktur auf, wobei die Außenstruktur die Innenstruktur umschließt. Die Innenstruktur ist gitterförmig ausgebildet und weist mindestens zwei Durchgangskanäle auf. Ferner ist ein Querschnitt der Außenstruktur mit mindestens sechs Kanten gebildet.

Aufgabe der vorliegenden Erfindung ist es, einen Füllkörper mit zwei gegenüberliegenden Hauptausdehnungsflächen und einer Außenstruktur sowie einer Innenstruktur derart weiterzubilden, dass dieser sich durch ein Optimum hinsichtlich niedrigem Druckverlust und geeignet großer Fläche auszeichnet. Ferner soll eine besonders gute Durchmischung von Medien, die den Füllkörper bzw. ein durch diese Füllkörper gebildetes Füllkörperbett durchströmen, erreicht werden, so dass ein besonders großer Stoffaustausch bzw. Wärmeaustausch resultiert.

Gelöst wird die Aufgabe durch einen Füllkörper, der gemäß den Merkmalen des Patentanspruchs 1 ausgebildet ist.

Der Füllkörper weist eine Außenstruktur und eine Innenstruktur auf, wobei durch die Außenstruktur zwei einander abgewandte Hauptausdehnungsflächen des Füllkörpers gebildet sind und die zwischen den beiden Hauptausdehnungsflächen ausgebildete Struktur des Füllkörpers die Innenstruktur bildet. Dabei weist die Innenstruktur zumindest ein inneres Leitprofil auf, wobei das innere Leitprofil geneigt zu den Hauptausdehnungsflächen ausgebildet ist. In diesem Zusammenhang ist der Begriff "geneigt" dahingehend zu verstehen, dass das innere Leitprofil weder senkrecht noch parallel zu den Hauptausdehnungsflächen ausgebildet ist.

Das zwischen den beiden Hauptausdehnungsflächen ausgebildete innere Leitprofil bewirkt, dass ein in den Füllkörper einströmendes Fluid, insbesondere ein von der einen Hauptausdehnungsfläche in Richtung der anderen Hauptausdehnungsfläche strömendes Fluid innerhalb des Füllkörpers durch das innere Leitprofil umgelenkt wird. Dadurch werden die Strömungsgeschwindigkeit und die Strömungsrichtung des den Füllkörper durchströmenden Fluids verändert, wodurch eine besonders gute Durchmischung, insbesondere eine Verwirbelung erreicht wird, was sich wiederum vorteilhaft auf den Stoff- und/oder Wärmeaustausch auswirkt.

Bei einer bevorzugt flachen Ausgestaltungsform des Füllkörpers wird sich dieser in einer Schüttung z.B. in einer Kolonne auch überwiegend flach ausrichten, d.h. die Flächennormale einer der beiden Teilflächen von einer der beiden der Hauptausdehnungsflächen bzw. die einer durch die Außenstruktur gebildete Ebene wird zumeist annähernd parallel zur Kolonnenachse sein. Dies wirkt sich gleichfalls vorteilhaft auf den Stoff- und/oder Wärmeaustausch aus.

In Abhängigkeit von der Ausrichtung des inneren Leitprofils bezüglich der Hauptausdehnungsflächen und der Form des Leitprofils kann eine mehr oder weniger starke Umlenkung des Fluids erreicht werden.

Vorzugsweise ist das innere Leitprofil plattenförmig mit einer bevorzugt geringen Wanddicke gestaltet, wobei es durchaus denkbar ist, dass das innere Leitprofil gekrümmt ausgebildet ist.

Hinsichtlich der Ausrichtung und der Neigung des inneren Leitprofils wird es als besonders vorteilhaft angesehen, wenn auf der die eine Hauptausdehnungsfläche aufweisenden Seite des Füllkörpers durch die Außenstruktur eine Ebene gebildet ist, wobei das innere Leitprofil geneigt zu dieser Ebene ausgebildet ist. Ein kleiner Winkel zwischen dem inneren Leitprofil und der Ebene korrespondiert dabei zu einer besonders starken Umlenkung eines in Richtung der einen Hauptausdehnungsfläche einströmenden Fluids. Vorzugsweise beträgt der Winkel zwischen dem inneren Leitprofil und der Ebene ≥ 10° bis ≤ 80°, insbesondere ≥ 20° bis ≤ 70°.

Ein kleiner Winkel, beispielsweise im Bereich von 20°, stellt eine sehr flache Ausführungsform des Füllkörpers und somit einen Füllkörper mit einer niedrigen Bauhöhe dar mit allerdings höherem Druckverlust. Ein Füllkörper mit einem Leitprofil im Winkelbereich von 70° weist eine entsprechend größere Bauhöhe auf und zeichnet sich durch einen niedrigeren Druckverlust für die Fluidströmung aus.

In einer vorteilhaften Weiterbildung weist der Füllkörper mehrere beabstandete innere Leitprofile auf, wobei insbesondere vorgesehen ist, dass die inneren Leitprofile in die gleiche Richtung geneigt ausgebildet sind. Die Gestaltung des Füllkörpers mit mehreren inneren Leitprofilen gewährleistet, dass eine besonders effektive Umlenkung des Fluidstroms innerhalb des Füllkörpers über eine möglichst große Fläche bei gleichzeitig geringer Bauhöhe des Füllkörpers erreicht wird.

In diesem Zusammenhang wird es als besonders vorteilhaft angesehen, wenn benachbarte innere Leitprofile zueinander geneigt und somit nicht parallel zueinander ausgebildet sind.- Dadurch wird ein in den Leitkörper eindringender Fluidstrom an den unterschiedlichen Leitprofilen um unterschiedliche Winkel umgelenkt, wodurch die Geschwindigkeit und Richtung des Fluidstroms lokal variiert werden, wodurch der Stoff- und/oder Massenaustausch effizienter erfolgt. Ein Winkel zwischen zwei inneren Leitprofilen beträgt dabei vorzugsweise zwischen 5° und 20°.

Es wird als vorteilhaft angesehen, wenn zwei benachbarte innere Leitprofile einen den Füllkörper von der einen Hauptausdehnungsfläche in Richtung der anderen Hauptausdehnungsfläche durchsetzenden Durchgangskanal bilden.

Als besonders vorteilhaft wird es angesehen, wenn innere Leitprofile in einer Richtung senkrecht zu der durch die Außenstruktur gebildeten Ebene - d.h. in einer Aufsichtsprojektion - sich annähernd berühren oder sogar überlappend angeordnet sind. Dadurch wird eine große Fläche des Füllkörpers parallel zu der Ebene durch die inneren Leitprofile abgedeckt. Ein in einer Richtung senkrecht zu der Ebene in den Füllkörper einströmendes Fluid kann somit nicht ungehindert den Füllkörper durchdringen. Stattdessen wird ein Großteil des Fluids an den sich nahezu oder ganz überlappenden inneren Leitprofilen umgelenkt.

Des Weiteren trifft eine in Richtung der Ebene auf den Füllkörper einströmende oder herabregnende Flüssigkeit nur auf der Einströmrichtung zugewandte Flächen der inneren Leitprofile auf, wobei überlappende Teilbereiche der inneren Leitprofile und der Einströmrichtung abgewandten Flächen der inneren Leitprofile trocken bleiben. Ein an die abgewandte Fläche des Leitprofils einströmender Gasstrom kann dadurch ungestört an den Leitprofilen und im Zwischenbereich zwischen den Leitprofilen umgelenkt werden. Hieraus resultiert ein geringer Druckverlust. Um den Stoffaustausch zu erhöhen, können Löcher, Schlitze oder andere Öffnungsformen in die Leitprofile eingebracht werden, wodurch Flüssigkeit auch auf die Rückseite des jeweiligen Leitprofils gelangt und eine intensive Durchmischung der verschiedenen Fluide erfolgt, so dass der Stoffaustausch bzw. Wärmeaustausch erhöht wird.

Um eine Verformung oder ein Brechen des Füllkörpers zu verhindern sowie die Stabilität des Füllkörpers, insbesondere die Stabilität des inneren Leitprofils gegen eine mechanische Verformung zu erhöhen, ist in einer vorteilhaften Weiterbildung vorgesehen, dass die Innenstruktur zumindest einen Verbindungssteg aufweist, wobei der Verbindungssteg das innere Leitprofil mit der Außenstruktur oder zwei innere Leitprofile verbindet. Der Verbindungssteg ist dabei vorzugsweise dünnwandig ausgebildet, um einen geringen Strömungswiderstand und ein geringes Gewicht des Füllkörpers sicherzustellen. Dieser Verbindungssteg kann ganz oder teilweise in der Innenstruktur liegen. Es ist auch denkbar, dass der Verbindungssteg ganz außen auf einer der beiden Hauptausdehnungsflächen - z.B. verbindend über die äußeren Leitprofile und über der Außenstruktur - aufgesetzt ist.

Um eine intensive Durchmischung und Umlenkung des an dem Füllkörper anströmenden und vorbeiströmenden Fluids zu erhöhen, ist es durchaus denkbar, dass der Füllkörper zumindest ein äußeres Leitprofil aufweist, wobei das äußere Leitprofil von einer der Hauptausdehnungsflächen und/oder von einer durch die Außenstruktur gebildeten, zwischen den Hauptausdehnungsflächen angeordneten Seitenfläche des Füllkörpers nach außen hervorstehend ausgebildet ist.

Hinsichtlich einer einfachen Gestaltung und einfachen Herstellung des Füllkörpers ist in einer vorteilhaften Weiterbildung vorgesehen, dass das innere Leitprofil und das äußere Leitprofil Teilbereiche eines Leitkörpers sind, wobei dieser Leitkörper zumindest eine der Hauptausdehnungsflächen und/oder zumindest eine der Seitenflächen des Füllkörpers durchsetzt.

Hinsichtlich einer möglichst großen Flächenabdeckung ist es durchaus denkbar, dass ein inneres Leitprofil und ein äußeres Leitprofil, ein Leitkörper und ein inneres Leitprofil und/oder mehrere Leitkörper in einer Richtung senkrecht zu der durch die Außenstruktur gebildeten Ebene überlappend angeordnet sind.

In einer bevorzugten Ausführungsform weist das innere und/oder das äußere Leitprofil zumindest eine Durchtrittsöffnung auf. Durch die Durchtrittsöffnung wird der Strömungswiderstand des Füllkörpers verringert und zudem das Strömungsprofil des einströmenden Fluids lokal variiert.

Die Durchtrittsöffnung kann beispielsweise kreisförmig oder schlitzartig ausgebildet sein. Es ist auch durchaus denkbar, dass in das Leitprofil mehrere Schnitte eingebracht sind, wobei eine Durchtrittsöffnung dadurch gebildet ist, dass ein zwischen den Schnitten liegender Teilbereich des Leitprofils bügelförmig herausgebogen ist, insbesondere zwei benachbarte Teilbereiche gegensinnig bügelförmig ausgebogen sind.

Insbesondere hinsichtlich der Bildung einer großen Anzahl von Abtropfstellen an dem inneren und/oder dem äußeren Leitprofil wird es als besonders vorteilhaft angesehen, wenn das innere und/oder das äußere Leitprofil mehrere, vorzugsweise in Richtung der einen Hauptausdehnungsfläche und/oder in Richtung der anderen Hauptausdehnungsfläche ausgebildete Vorsprünge aufweist. Vorzugsweise sind diese Vorsprünge stabförmig ausgebildet, wobei es durchaus denkbar ist, dass ein Vorsprung die ihm zugewandte Hauptausdehnungsfläche durchsetzt.

Um eine besonders offene Außenstruktur und somit ein besonders leichtes Eindringen der Fluidströmung in den Füllkörper sicherzustellen, weist der Füllkörper in einer bevorzugten Ausführungsform in mindestens einer der Seitenflächen mindestens eine Durchgangsöffnung auf. Als besonders vorteilhaft wird es angesehen, wenn zwei einander abgewandte Seitenflächen der Außenstruktur jeweils mindestens eine Durchgangsöffnung aufweisen.

Um eine möglichst geringe Bauhöhe des Füllkörpers zu erreichen, ist die Außenstruktur vorzugsweise flach ausgebildet und/oder gewellt und/oder gewinkelt und/oder sattelförmig und/oder verdrillt gestaltet. Insbesondere weist die Außenstruktur zwei einander abgewandte Seitenflächen auf, wobei diese Seitenflächen gewinkelt zueinander ausgebildet sein können.

In einer bevorzugten Ausführungsform des Füllkörpers ist ein Querschnitt der Außenstruktur gebildet, der mehrere nach außen gerichtete Kanten aufweist. Diese Kanten sind insbesondere spitz ausgebildet.

Vorzugsweise ist die Außenstruktur des Füllkörpers in einander abgewandten Endbereichen stärker oder schwächer ausgebildet als in einem mittleren Bereich der Außenstruktur, der sich zwischen den einander abgewandten Endbereichen befindet. Insbesondere ist der Füllkörper zwischen dem jeweiligen Endbereich und dem mittleren Bereich stärker oder schwächer ausgebildet als im Endbereich und im mittleren Bereich. Durch diese Gestaltung lässt sich insbesondere die Stabilität des Füllkörpers erhöhen sowie der Stoffaustausch bzw. Wärmeaustausch optimieren.

In einer bevorzugten Ausführungsform sind Oberflächen den Füllkörpers, insbesondere die Oberfläche des inneren Leitprofils, zumindest teilweise profiliert gestaltet.

Der Füllkörper besteht insbesondere aus Kunststoff oder Metall oder Keramik. Diese Werkstoffe ermöglichen es, die Strukturen des Füllkörpers, insbesondere das innere Leitprofil, das äußere Leitprofil, den Leitkörper, den Verbindungssteg sowie die Außenstruktur möglichst so zu gestalten, sodass eine sehr offene Struktur des Füllkörpers und ein möglichst geringes Gewicht des Füllkörpers bei dennoch hoher mechanischer Stabilität gewährleistet ist. Hierbei werden auch moderne Fertigungsmethoden - wie z.B. 3D-Druck - für die verschiedenen Werkstoffe berücksichtigt.

Bei dem beschriebenen Füllkörper ist es durchaus möglich, dass sich innenliegende Komponenten, vorliegend die Leitprofile, bis in den Bereich der Außenstruktur erstrecken.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand von sieben bevorzugten Ausführungsformen dargestellt, ohne hierauf beschränkt zu sein.

Die Figuren zeigen:
- Fig. 1: ein erstes Ausführungsbeispiel des Füllkörpers in einer Ansicht gemäß dem Pfeil I in Fig. 2,
- Fig. 2: den Füllkörper in einer Ansicht gemäß dem Pfeil II in Fig. 1,
- Fig. 3: den Füllkörper in einer Ansicht gemäß dem Pfeil III in Fig. 1,
- Fig. 4: den Füllkörper in einer Schnittansicht gemäß der Linie IV in Fig. 2,
- Fig. 5: den Füllkörper in einer Schnittansicht gemäß der Linie V in Fig. 2,
- Fig. 6: den Füllkörper gemäß Fig. 1 in einer perspektivischen Ansicht,
- Fig. 7: ein zweites Ausführungsbeispiel des Füllkörpers in einer Ansicht gemäß dem Pfeil VII in Fig. 8,
- Fig. 8: den Füllkörper in einer Ansicht gemäß dem Pfeil VIII in Fig. 7,
- Fig. 9: den Füllkörper gemäß Fig. 7 in einer perspektivischen Ansicht,
- Fig. 10: ein drittes Ausführungsbeispiel des Füllkörpers in einer Ansicht gemäß dem Pfeil X in Fig. 11,

- Fig. 11: den Füllkörper in einer Ansicht gemäß dem Pfeil XI in Fig. 10,
- Fig. 12: den Füllkörper gemäß Fig. 10 in einer perspektivischen Ansicht,
- Fig. 13: ein viertes Ausführungsbeispiel des Füllkörpers in einer Ansicht gemäß dem Pfeil XIII in Fig. 14,
- Fig. 14: den Füllkörper in einer Ansicht gemäß dem Pfeil XIV in Fig. 13,
- Fig. 15: den Füllkörper gemäß Fig. 13 in einer perspektivischen Ansicht,
- Fig. 16: ein fünftes Ausführungsbeispiel des Füllkörpers in einer Ansicht gemäß dem Pfeil XVI in Fig. 17,
- Fig. 17: den Füllkörper in einer Ansicht gemäß dem Pfeil XVII in Fig. 16,
- Fig. 18: den Füllkörper gemäß Fig. 16 in einer perspektivischen Ansicht;
- Fig. 19: ein sechstes Ausführungsbeispiel des Füllkörpers in einer Ansicht gemäß dem Pfeil XIX in Fig. 20,
- Fig. 20: den Füllkörper in einer Ansicht gemäß dem Pfeil XX in Fig. 19,
- Fig. 21: den Füllkörper in einer Schnittansicht gemäß der Linie XXI - XXI in Fig. 20,
- Fig. 22: den Füllkörper gemäß Fig. 19 in einer perspektivischen Ansicht,
- Fig. 23: ein siebtes Ausführungsbeispiel des Füllkörpers in einer Ansicht gemäß dem Pfeil XXIII in Fig. 24,
- Fig. 24: den Füllkörper in einer Ansicht gemäß dem Pfeil XXIV in Fig. 23,
- Fig. 25: den Füllkörper in einer Schnittansicht gemäß der Linie XXV - XXV in Fig.24,
- Fig. 26: den Füllkörper gemäß Fig. 23 in einer perspektivischen Ansicht.

Die jeweilige in den Figuren veranschaulichte Ausführungsform des Füllkörpers 1 findet mit einer Vielzahl entsprechender Füllkörper 1 Verwendung in einer Anordnung in einem sog. Bett aus Füllkörpern, meist einer regellosen Schüttung.

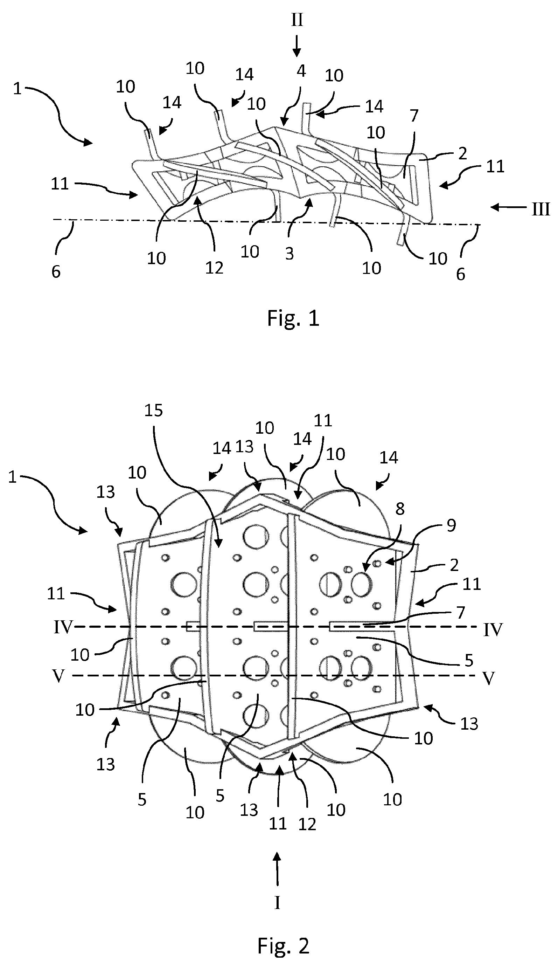

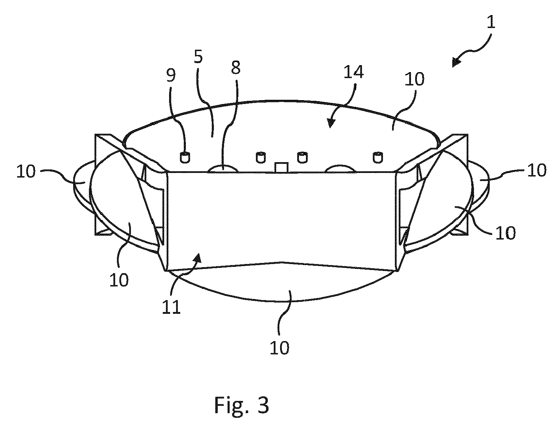

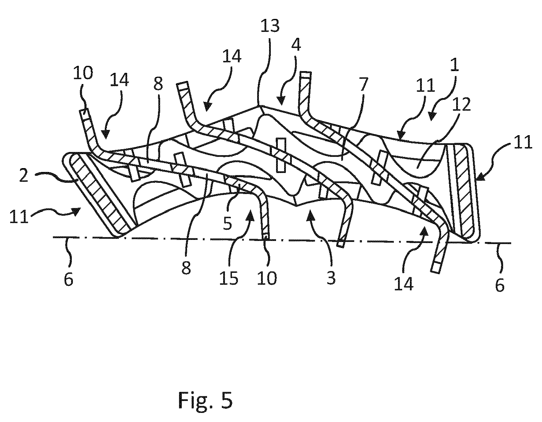

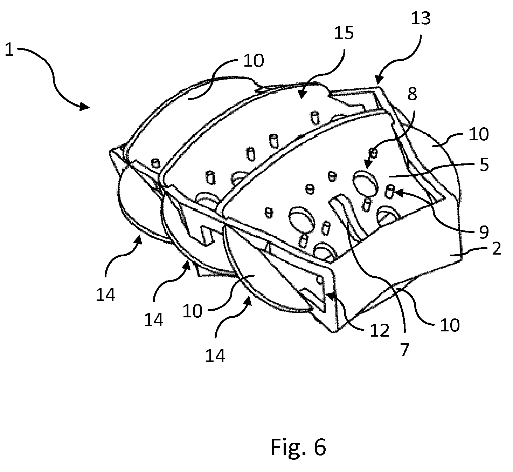

Die in den Fig. 1 bis 6 veranschaulichte Gestaltung eines ersten Ausführungsbeispiels des Füllkörpers 1 weist eine Außenstruktur 2 mit zwei einander abgewandten Hauptausdehnungsflächen 3, 4 auf, wobei ein Querschnitt der Außenstruktur 2 gebildet ist, der sechs nach außen gerichtete Kanten 13 aufweist. Zudem weist der Füllkörper 1 mehrere Seitenflächen 11 auf, wobei diese Seitenflächen 11 zwischen den beiden Hauptausdehnungsflächen 3, 4 ausgebildet sind.

Eine zwischen den beiden Hauptausdehnungsflächen 3, 4 ausgebildete Innenstruktur 15 weist drei innere Leitprofile 5 auf, wobei diese inneren Leitprofile 5 geneigt zu den Hauptausdehnungsflächen 3, 4 ausgebildet sind.

Dabei sind die inneren Leitprofile 5 in die gleiche Richtung geneigt angeordnet, wobei benachbarte innere Leitprofile 5 nicht parallel zueinander, sondern geneigt zueinander ausgebildet sind. Ein Winkel β zwischen zwei inneren Leitprofilen 5 beträgt dabei vorzugsweise zwischen 5° und 20°, insbesondere zwischen 10° und 15°.

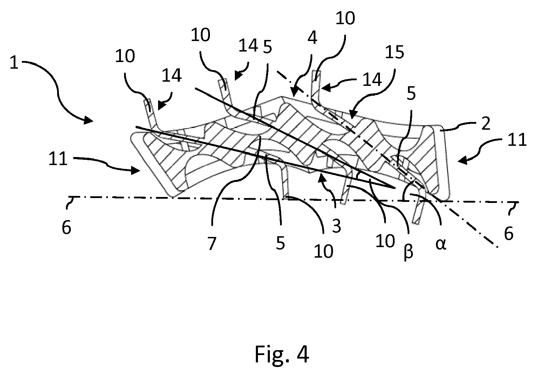

Auf der Seite des Füllkörpers 1, der die eine Hauptausdehnungsfläche 3 aufweist, ist durch die Außenstruktur 2 eine Ebene 6 gebildet. Die inneren Leitprofile 5 sind geneigt zu dieser Ebene 6 ausgebildet, wobei ein Winkel α zwischen einem der inneren Leitprofile 5 und dieser Ebene 6 zwischen 10° und 70° beträgt, wie insbesondere der Fig. 4 zu entnehmen ist.

Die inneren Leitprofile 5 sind bevorzugt dünnwandig und bevorzugt leicht gebogen ausgebildet, wobei auch ein Wendepunkt für die Krümmung vorhanden sein kann.

Die Innenstruktur 15 des Füllkörpers 1 weist vier, in einer zu der Ebene 6 senkrechten anderen Ebene angeordnete Verbindungsstege 7 auf, wobei zwei dieser Verbindungsstege 7 jeweils zwei benachbarte innere Leitprofile 5 miteinander verbindet und die übrigen zwei Verbindungsstege 7 jeweils ein inneres Leitprofil 5 mit der Außenstruktur 2 verbindet.

Die Außenstruktur 2 des Füllkörpers 1 ist im Wesentlichen flach und/oder leicht gebogen ausgebildet. Dabei weisen die Hauptausdehnungsflächen 3, 4 jeweils zwei konkave Teilflächen auf.

An den Seitenflächen 11 und den Hauptausdehnungsflächen 3, 4 weist der Füllkörper 1 zwölf nach außen hervorstehende äußere Leitprofile 10 auf. Sechs dieser zwölf äußeren Leitprofile 10 sind an gegenüberliegenden Seitenflächen 11 ausgebildet. Diese an den Seitenflächen 11 ausgebildeten äußeren Leitprofile 10 sind insbesondere in der Fig. 2 zu erkennen. Die anderen sechs äußeren Leitprofile 10 sind an den Hauptausdehnungsflächen 3, 4 ausgebildet, wobei drei äußere Leitprofile 10 an der einen Hauptausdehnungsfläche 3 und drei andere äußere Leitprofile 10 an der anderen Hauptausdehnungsfläche 4 ausgebildet sind, wie insbesondere der Fig. 1 zu entnehmen. Jeweils vier der äußeren Leitprofile 10, vorliegend eines der einen Seitenfläche 11, eines der anderen Seitenfläche 11, eines der einen Hauptausdehnungsfläche 3 und eines der anderen Hauptausdehnungsfläche 4, grenzen an eines der inneren Leitprofile 5 an, sodass das innere Leitprofil 5 und die an das innere Leitprofil 5 angrenzenden äußeren Leitprofile 10 durch einen Teilbereich eines Leitkörpers 14 gebildet sind. Der Leitkörper 14 durchsetzt die beiden Hauptausdehnungsflächen 3, 4 und zwei gegenüberliegende Seitenflächen 11 des Füllkörpers 1.

In einem Querschnitt senkrecht zu den beiden Hauptausdehnungsflächen 3, 4 weist der Leitkörper 14 einen S-förmigen Querschnitt auf.

Die inneren Leitprofile 5 weisen jeweils mehrere, kreisförmige Durchtrittsöffnungen 8 und mehrere in Richtung der anderen Hauptausdehnungsfläche 4 ausgebildete, stabförmige Vorsprünge 9 auf. Die Durchtrittsöffnungen 8 dienen dabei einer Reduzierung des Druckverlusts an dem Leitkörper 1 und zudem einer Vermischung und Verwirbelung des den Leitkörper 1 durchströmenden Fluids.

Die stabförmigen Vorsprünge 9 an der Oberfläche des inneren Leitprofils 5 fungieren u.a. als zusätzliche Abtropfstellen.

Eine besonders offene Struktur des Füllkörpers 1 wird dadurch erreicht, dass zwei gegenüberliegende Seitenflächen 11 des Füllkörpers 1 jeweils zwei Durchgangsöffnungen 12 aufweisen.

Für die nachfolgend beschriebenen Ausführungsbeispiele sind Komponenten, die mit denjenigen des vorstehend beschriebenen Ausführungsbeispiels übereinstimmen, mit denselben Bezugszeichen bezeichnet.

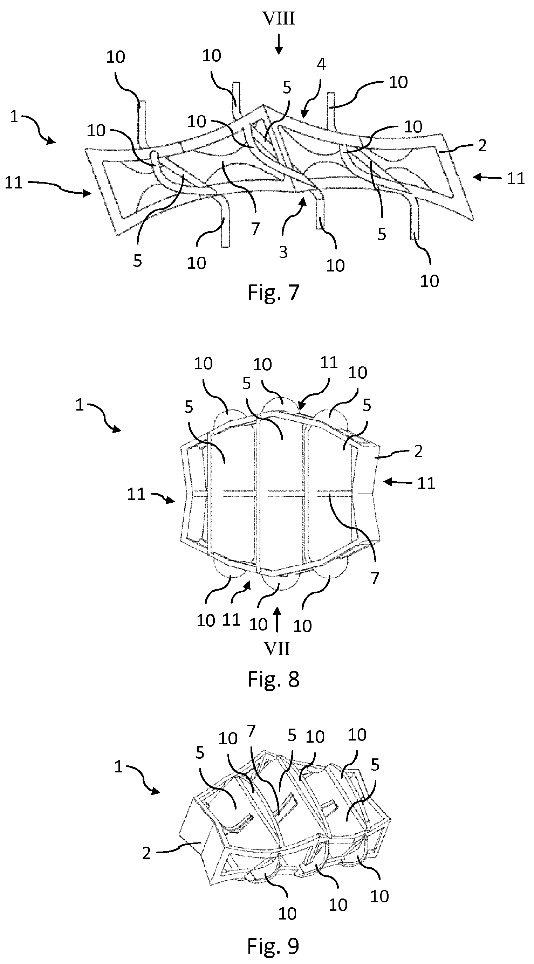

Die Fig. 7 bis 9 zeigen ein zweites Ausführungsbeispiel des Füllkörpers 1, wobei sich dieses Ausführungsbeispiel von dem ersten Ausführungsbeispiel im Wesentlichen dadurch unterscheidet, dass das innere Leitprofil 5 im Wesentlichen glatt und geschlossen ausgebildet und somit frei von Vorsprüngen 9 und Durchtrittsöffnungen 8 ist und benachbarte Leitprofile 5 in der Aufsichtsprojektion nicht überlappen.

Zudem sind die inneren Leitprofile 5 eben ausgebildet, wohingegen die äußeren Leitprofile 10 gebogen ausgebildet sind, wobei das äußere Leitprofil 10 an die eine Hauptausdehnungsfläche 3 annähernd tangential und an die andere Hauptausdehnungsfläche 4 annähernd senkrecht anschließt.

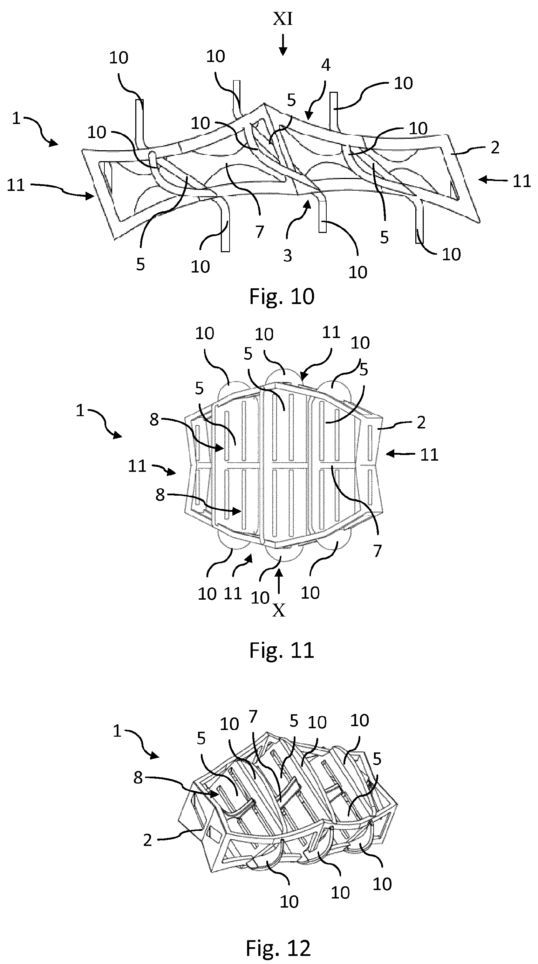

Ein in den Fig. 10 bis 12 gezeigtes, drittes Ausführungsbeispiel unterscheidet sich von dem in den Fig. 7 bis 9 gezeigten Ausführungsbeispiel im Wesentlichen dadurch, dass die inneren Leitprofile 5 jeweils mehrere schlitzartige Durchtrittsöffnungen 8 aufweisen.

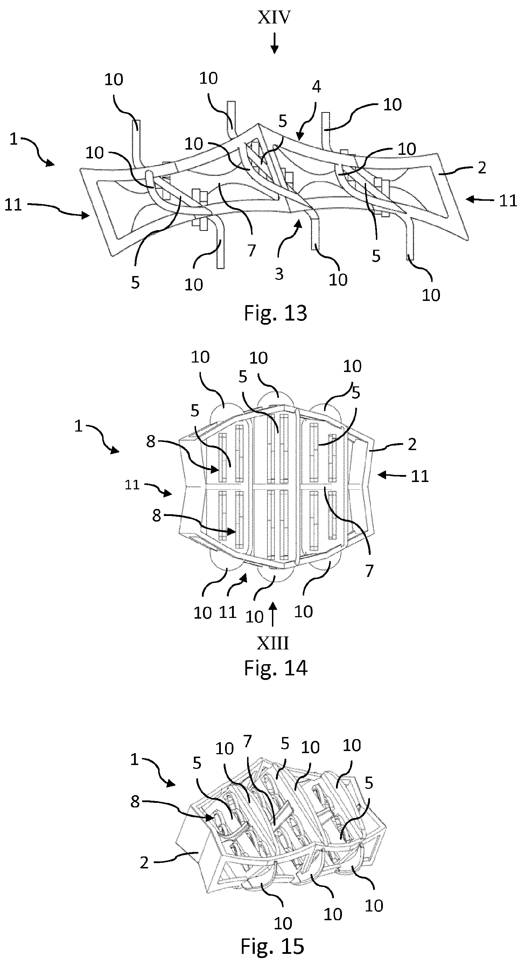

Das in den Fig. 13 bis 15 gezeigte Ausführungsbeispiel zeichnet sich gegenüber dem vorigen Ausführungsbeispiel dadurch aus, dass die schlitzartigen Durchtrittsöffnungen 8 dadurch gebildet sind, dass in die inneren Leitprofile 5 mehrere Schnitte eingebracht sind, wobei zwischen den Schnitten liegende Teilbereiche des inneren Leitprofils 5 gegensinnig bügelförmig ausgebogen sind.

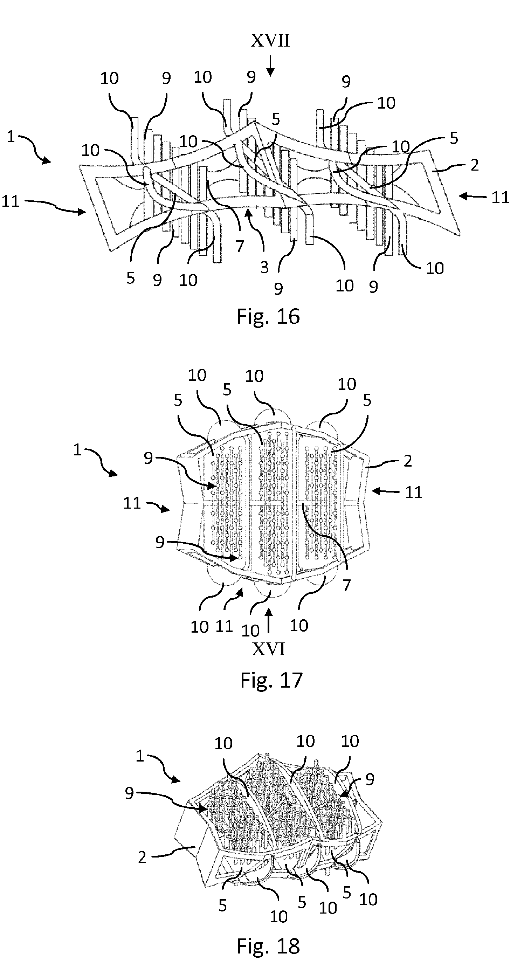

Das in den Fig. 16 bis 18 gezeigte fünfte Ausführungsbeispiel zeichnet sich gegenüber dem zweiten Ausführungsbeispiel im Wesentlichen dadurch aus, dass die inneren Leitprofile 5 eine Vielzahl von stabförmigen Vorsprüngen 9 aufweisen, wobei sowohl die der einen Hauptausdehnungsfläche 3 zugewandte Seite als auch die der anderen Hauptausdehnungsfläche 4 zugewandte Seite des inneren Leitprofils 5 mit Vorsprüngen 9 versehen ist.

Die stabförmigen Vorsprünge 9 sind dabei annähernd identisch gestaltet.

Die Längserstreckung der Vorsprünge 9 ist dabei derart, dass ein Teil der Vorsprünge 9 die eine Hauptausdehnungsfläche 3 oder die andere Hauptausdehnungsfläche 4 durchsetzt oder zumindest annähernd berührt.

Außerdem kann die Ausgestaltungsform auch ohne die äußeren Leitprofile ausgeführt sein.

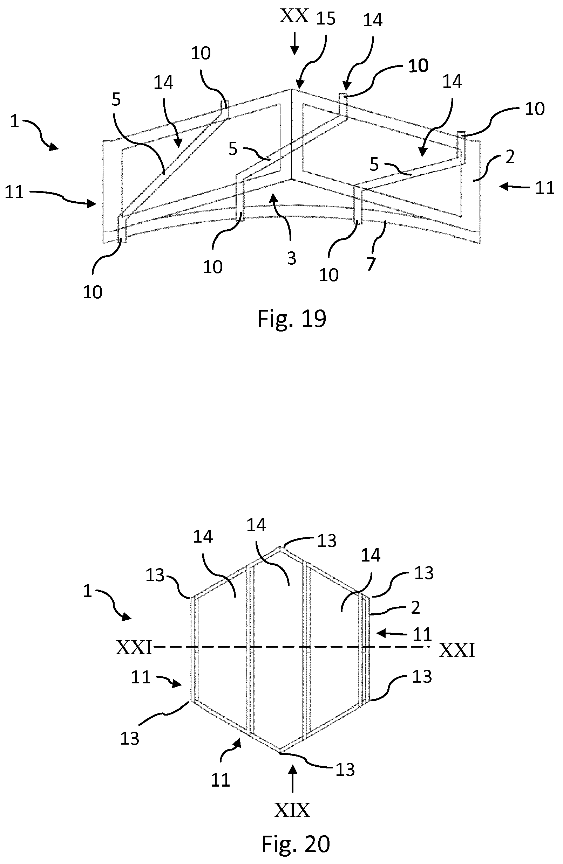

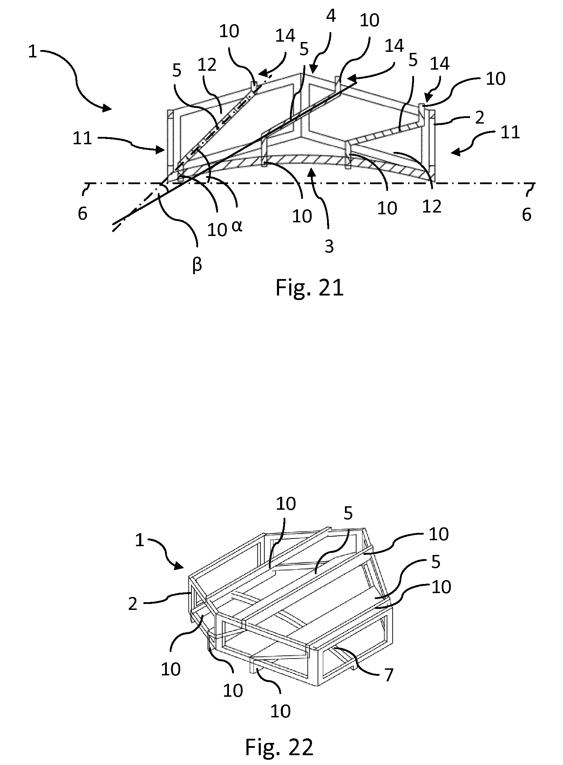

Die Fig. 19 bis 22 zeigen ein sechstes Ausführungsbeispiel des Füllkörpers 1, wobei sich dieses Ausführungsbeispiel von dem ersten Ausführungsbeispiel im Wesentlichen dadurch unterscheidet, dass das innere Leitprofil 5 im Wesentlichen glatt und geschlossen ausgebildet und somit frei von Vorsprüngen 9 und Durchtrittsöffnungen 8 ist und benachbarte Leitprofile 5 in der Aufsichtsprojektion nicht überlappen. Die Übergänge zwischen den Leitprofilen 5 und den äußeren Leitprofilen 10 sind nicht abgerundet, sondern eckig. Die inneren Leitprofile 5 und äußeren Leitprofile 10 sind als rechteckigförmige Platten ausgebildet. Äußere Leitprofile 10 an den Seitenflächen sind nicht vorhanden. Der Verbindungssteg 7 sitzt außen auf der Außenstruktur 2 auf, und zwar mindestens auf den äußeren Leitprofilen 10 von mindestens einer der Hauptausdehnungsfläche (3 bzw. 4). Es ist aber auch denkbar ohne einen Verbindungssteg auszukommen. Alle Seitenflächen der Außenstruktur 2 - d.h. alle Seitenflächen senkrecht zur gebildeten Ebene 6 - weisen mindestens eine Durchtrittsöffnung für eine Fluidströmung auf. Es ist aber auch möglich, dass nur ein Teil dieser Seitenflächen eine solche Durchtrittsöffnung aufweist bis hin, dass keine dieser Seitenflächen eine solche Durchtrittsöffnung aufweist. Einander abgewandte Seitenflächen (d.h. die jeweils erste und vierte in einer Zählreihenfolge links- oder rechtsgängig - unabhängig davon welche der Seitenflächen als erste gewählt wird) sind bei diesem Ausführungsbeispiel zueinander parallel und stehen jeweils senkrecht auf einer gebildeten Ebene 6.

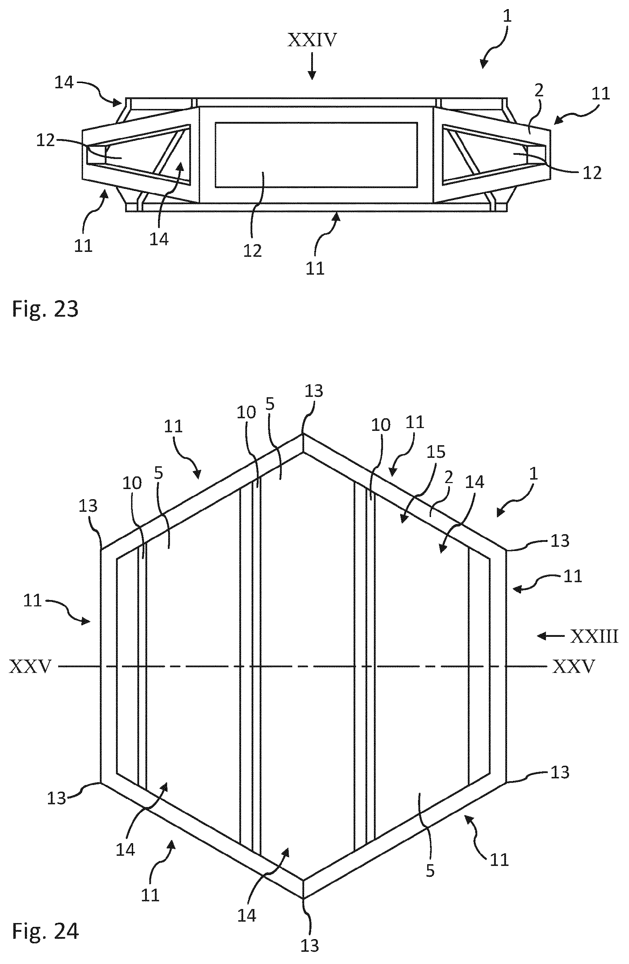

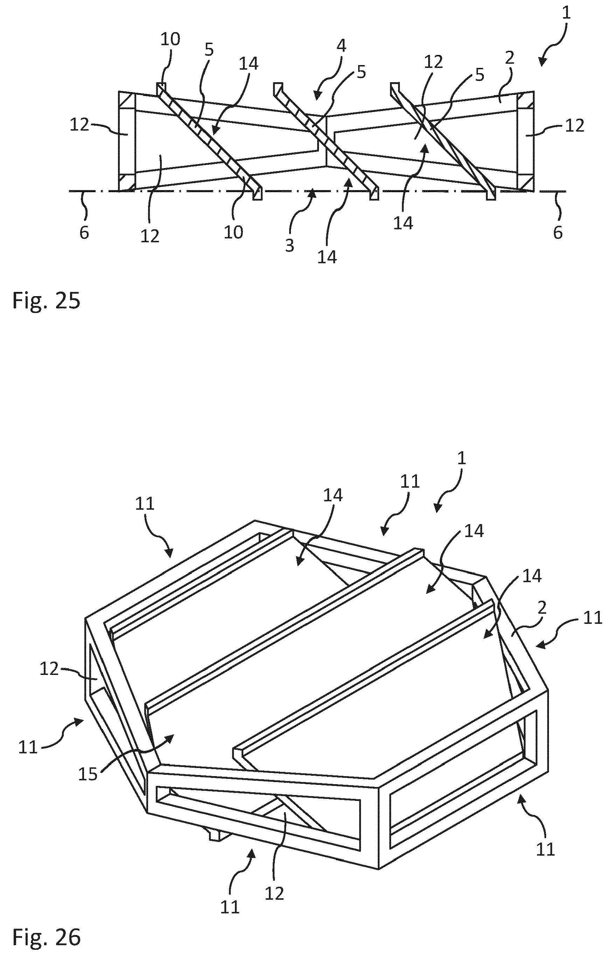

Die Figuren 23 bis 26 zeigen ein siebtes Ausführungsbeispiel des Füllkörpers 1, wobei sich dieses Ausführungsbeispiel vom dem sechsten Ausführungsbeispiel dadurch unterscheidet, dass die an die Stirnseiten der Leitprofile 5 angrenzenden vier Seitenflächen 11 der Außenstruktur 2 des Füllkörpers 1 jeweils nicht rechteckig ausgebildet sind, sondern sich die eine Seitenfläche 11 zur benachbarten Seitenfläche 11 hin konisch verjüngt, so dass die jeweilige Seitenfläche eine Trapezform aufweist. Die Außenstruktur 2 ist in den einander abgewandten Endbereichen der verbleibenden beiden parallelen Seitenflächen 11 stärker ausgebildet als in den mittleren Bereich der Außenstruktur, in den die relevanten beiden Seitenflächen aneinanderstoßen. Bei geringfügiger Abwandlung der Außenstruktur 2 im Bereich der beiden aneinandergrenzenden genannten Seitenflächen 11 könnte die Außenstruktur 2 modifiziert werden, dass sie in den einander abgewandten Endbereichen stärker ausgebildet ist als im mittleren Bereich. Dies ist dann der Fall, wenn sich das Trapez zu dem Verbindungsbereich dieser beiden Seiten 11 nicht verjüngt, wie zu diesem siebten Ausführungsbeispiel gezeigt, sondern erweitert. Eine weitere Modifikation ist durch Änderung der Form der divergierenden Stäbe des jeweiligen Trapezes möglich. Bei dem siebten Ausführungsbeispiel sind die Stäbe des Trapezes gerade ausgebildet. Sie können durchaus gebogen sein, insbesondere aus der Ausgangstrapezebene hervorgehend, bezüglich dieser nach außen oder innen gebogen sein. Hierdurch lässt sich ein Füllkörper 1 darstellen, der zwischen dem jeweiligen Endbereich und dem mittleren Bereich stärker oder schwächer ausgebildet ist als im Endbereich und im mittleren Bereich.

### Bezugszeichenliste

- 1: Füllkörper
- 2: Außenstruktur
- 3: Hauptausdehnungsfläche
- 4: Andere Hauptausdehnungsfläche
- 5: Inneres Leitprofil
- 6: Ebene
- 7: Verbindungssteg
- 8: Durchtrittsöffnung
- 9: Vorsprung
- 10: Äußeres Leitprofil
- 11: Seitenfläche
- 12: Durchgangsöffnung
- 13: Kante
- 14: Leitkörper
- 15: Innenstruktur
- α: Winkel
- β: Winkel

## Patentansprüche

1. Füllkörper (1), insbesondere für Stoff- und/oder Wärmeaustauschkolonnen, die von einer Gas- und/oder Flüssigkeitsströmung durchsetzt werden, aufweisend eine Außenstruktur (2), wobei durch die Außenstruktur (2) zwei einander abgewandte Hauptausdehnungsflächen (3, 4) des Füllkörpers (1) gebildet sind, und eine zwischen den beiden Hauptausdehnungsflächen (3, 4) ausgebildete Innenstruktur (15), **dadurch gekennzeichnet, dass** die Innenstruktur (15) zumindest ein inneres Leitprofil (5) aufweist, wobei das innere Leitprofil (5) geneigt zu den Hauptausdehnungsflächen (3, 4) ausgebildet ist.

2. Füllkörper (1) nach Anspruch 1, **dadurch gekennzeichnet, dass** auf der die eine Hauptausdehnungsfläche (3) aufweisenden Seite des Füllkörpers (1) durch die Außenstruktur (2) eine Ebene (6) gebildet ist, wobei das innere Leitprofil (5) geneigt zu der Ebene (6) ausgebildet ist, insbesondere ein Winkel (α) zwischen dem inneren Leitprofil (5) und der Ebene (6) ≥10° bis ≤80°, vorzugsweise ≥20° bis ≤70° beträgt.

3. Füllkörper (1) nach Anspruch 1 oder 2, **dadurch gekennzeichnet, dass** der Füllkörper (1) mehrere beabstandete innere Leitprofile (5) aufweist, insbesondere die inneren Leitprofile (5) in die gleiche Richtung geneigt ausgebildet sind, vorzugsweise benachbarte innere Leitprofile (5) zueinander geneigt ausgebildet sind, insbesondere ein Winkel (β) zwischen zwei inneren Leitprofilen (5)≥5 bis 20°beträgt.

4. Füllkörper nach Anspruch 3, **dadurch gekennzeichnet, dass** durch zwei benachbarte innere Leitprofile (5) ein den Füllkörper (1) von der einen Hauptausdehnungsfläche (3) in Richtung der anderen Hauptausdehnungsfläche (4) durchsetzender Durchgangskanal gebildet ist.

5. Füllkörper (1) nach einem der Ansprüche 1 bis 4, **dadurch gekennzeichnet, dass** in der Innenstruktur (15) und/oder auf der/den Hauptausdehnungsflächen (3, 4) mindestens ein Verbindungssteg (7) vorhanden ist, wobei der Verbindungssteg (7) insbesondere das innere Leitprofil (5) bzw. das äußere Leitprofil (10) mit der Außenstruktur (2) verbindet oder der Verbindungssteg (7) zwei innere Leitprofile (5) bzw. zwei äußere Leitprofile (10) verbindet.

6. Füllkörper (1) nach einem der Ansprüche 1 bis 5, **dadurch gekennzeichnet, dass** der Füllkörper (1) zumindest ein äußeres Leitprofil (10) aufweist, wobei das äußere Leitprofil (10) von einer der Hauptausdehnungsflächen (3, 4) und/oder von einer durch die Außenstruktur (2) gebildeten Seitenfläche (11) des Füllkörpers (1) nach außen hervorstehend ausgebildet ist.

7. Füllkörper (1) nach Anspruch 6, **dadurch gekennzeichnet, dass** das innere Leitprofil (5) und das äußere Leitprofil (10) Teilbereiche eines Leitkörpers (14) sind, wobei dieser Leitkörper (14) zumindest eine der Hauptausdehnungsflächen (3, 4) und/oder eine der Seitenflächen (11) des Füllkörpers (1) durchsetzt.

8. Füllkörper (1) nach einem der Ansprüche 1 bis 7, **dadurch gekennzeichnet, dass** das innere Leitprofil (5) und/oder das äußere Leitprofil (10) zumindest eine Durchtrittsöffnung (8) aufweist.

9. Füllkörper (1) nach einem der Ansprüche 1 bis 8, **dadurch gekennzeichnet, dass** das innere Leitprofil (5) und/oder das äußere Leitprofil mehrere Vorsprünge (9) aufweist, vorzugsweise die Vorsprünge (9) stabförmig ausgebildet sind, insbesondere die Vorsprünge in Richtung der einen Hauptausdehnungsfläche (3) und/oder in Richtung der anderen Hauptausdehnungsfläche (4) ausgebildet sind.

10. Füllkörper (1) nach einem der Ansprüche 1 bis 9, **dadurch gekennzeichnet, dass** benachbarte innere Leitprofile (5) und/oder ein inneres Leitprofil (5) und ein äußeres Leitprofil (10) und/oder benachbarte Leitkörper (14) in einer Richtung senkrecht zu der durch die Außenstruktur (2) gebildeten Ebene (6) überlappend oder sich annähernd berührend in einer Aufsichtsprojektion angeordnet sind.

11. Füllkörper (1) nach einem der Ansprüche 1 bis 10, **dadurch gekennzeichnet, dass mindestens** eine der Seitenflächen (11) der Außenstruktur (2) mindestens eine Durchgangsöffnung (12) aufweist, vorzugsweise zwei einander abgewandte Seitenflächen (11) der Außenstruktur (2) jeweils mindestens eine Durchgangsöffnung (12) aufweisen.

12. Füllkörper (1) nach einem der Ansprüche 1 bis 11, **dadurch gekennzeichnet, dass** die Außenstruktur (2) flach ausgebildet und/oder gewellt und/oder gewinkelt und/oder sattelförmig und/oder verdrillt gestaltet ist, insbesondere zwei einander abgewandte Seitenflächen (11) der Außenstruktur (2) zueinander gewinkelt ausgebildet sind.

13. Füllkörper (1) nach einem der Ansprüche 1 bis 12, **dadurch gekennzeichnet, dass** ein Querschnitt der Außenstruktur (2) gebildet ist, der mehrere nach außen gerichtete Kanten (13) aufweist.

14. Füllkörper (1) nach einem der Ansprüche 1 bis 13, **dadurch gekennzeichnet, dass** die Außenstruktur (2) in einander abgewandten Endbereich stärker oder schwächer ausgebildet ist, als in einem mittleren Bereich der Außenstruktur (2), insbesondere der Füllkörper (1) zwischen dem jeweiligen Endbereich und dem mittleren Bereich stärker oder schwächer ausgebildet ist als im Endbereich und im mittleren Bereich.

15. Füllkörper (1) nach einem der Ansprüche 1 bis 14, **dadurch gekennzeichnet, dass** die Oberfläche des Füllkörpers (1), insbesondere die Oberfläche des inneren Leitprofils (5), zumindest teilweise profiliert gestaltet ist.

16. Füllkörper (1) nach einem der Ansprüche 1 bis 15, **dadurch gekennzeichnet, dass** der Füllkörper (1) aus Kunststoff oder Metall oder Keramik besteht.
